# EUROPÄISCHE PATENTSCHRIFT

(11) **EP 2 423 897 B1**
(45) Veröffentlichungstag und Bekanntmachung des Hinweises auf die Patenterteilung: **24.10.2018**
(21) Anmeldenummer: 11164723.6
(22) Anmeldetag: 04.05.2011
(51) Int. Cl.: G08B 25/04, H04Q 1/02, G06F 11/20, G08B 29/16, G08B 25/14

(54) **GEFAHRENMELDEANLAGE UND VERFAHREN ZU DEREN BETRIEB**
HAZARD NOTIFICATION ASSEMBLY AND METHOD FOR ITS OPERATION
INSTALLATION D'ALERTE AUX DANGERS ET SON PROCÉDÉ DE FONCTIONNEMENT

(30) Priorität: 26.08.2010 DE 102010035476
(43) Veröffentlichungstag der Anmeldung: 29.02.2012
(73) Patentinhaber: Novar GmbH, 41469 Neuss (DE)
(72) Erfinder: Bemba, Martin, 50859, Köln (DE); Foulkes, Simon, Oakham Rutland, LE15 6SQ (GB); Herstix, Frank, 41466, Neuss (DE)
(74) Vertreter: Henkel, Breuer & Partner

(56) Entgegenhaltungen:
- WO-A2-2010/058271
- DE-A1- 10 127 057
- Various: "Why can't fieldbus be used for safety?", , 9 April 2007 (2007-04-09), Retrieved from the Internet: URL:http://safety.control.com/thread/10262 33508 [retrieved on 2017-12-08]

## Beschreibung

Die Erfindung betrifft eine Gefahrenmeldeanlage mit den Merkmalen des Oberbegriffes des Anspruches 1 und ein Verfahren zum Betreiben einer solchen Gefahrenmeldeanlage.

Eine ähnliche Gefahrenmeldeanlage und ein Verfahren zu deren Betreiben sind aus der DE 101 27 057 A bekannt.

Aus der US 4 538 138 ist eine Gefahrenmeldeanlage mit einer Zentraleinheit bekannt, an die über vieradrige Leitungen mehrere Gruppen von Teilnehmern angeschlossen sind. Dabei dienen jeweils zwei Adern als Adressbus und die beiden weiteren Adern als Datenbus.

Aus der US 2004/0078620 A ist eine Telekommunikationsanlage bekannt, die ein an ein Kommunikationsnetz angeschlossenes Hauptmodul und an letzteres einzeln angeschlossene Schnittstellenmodule für Teilnehmeranschlüsse umfasst. Jedes Schnittstellenmodul hat mehrere Linienkarten, die über einen Bus mit einer Reservelinienkarte verbunden sind, welche bei Ausfall einer Linienkarte deren Funktion übernimmt.

Gefahrenmeldeanlagen umfassen als Sammelbegriff insbesondere Brandmelde-, Einbruchmelde-, Videoüberwachungs- und Zutrittskontrollanlagen sowie weitere, sicherheitsrelevante Anlagen für öffentliche und private Gebäude, Industriekomplexe usw. Eine Gefahrenmeldeanlage, im Folgenden kurz "GMA", umfasst regelmäßig eine Zentraleinheit, an die, gegebenenfalls über Unterzentralen und/oder Koppler, bis zu mehrere tausend Sensoren und Aktoren, z.B. Brandmelder und Löschmittelsteuerungen, angeschlossen sind. Diese Sensoren und/oder Aktoren, die im folgenden auch kurz als Teilnehmer bezeichnet werden, sind ihrerseits in Gruppen von z.B. 123 Teilnehmern zusammengefasst. Die Teilnehmer jeder Gruppe sind seriell über eine zweiadrige Leitung in Feldbustechnik miteinander verbunden.

Die einzelnen Feldbusleitungen, von denen auch Stichleitungen abzweigen können, sind in der Regel als Ring oder Schleife (loop) mit ihrem Anfang und ihrem Ende an die Zentraleinheit, ggf. an eine Unterzentrale oder einen Koppler, angeschlossen.

Die Zentraleinheit ist gewöhnlich modular aufgebaut und beinhaltet als Hauptkomponenten u.a. eine Stromversorgung, eine Notstromversorgung, ein Display, eine Übertragungseinrichtung zur Weiterleitung von Meldungen an eine übergeordnete Stelle sowie bei direktem Anschluss der Feldbusleitungen eine von der Größe der Anlage abhängige Anzahl von Schnittstellen- oder Loopmodulen. Jedes Schnittstellenmodul arbeitet als Interface für eine nur ihm zugeordnete Feldbusleitung und hat vorgegebene Steuerungs- und Betriebsparameter, die an die Überwachungs- und/oder Steuerungsaufgaben der an diese Feldbusleitung angeschlossenen Teilnehmer angepasst sind. Gleichzeitig versorgt das Schnittstellenmodul die Teilnehmer mit ihrer Betriebsspannung und wickelt den Datenverkehr mit den Teilnehmern ab. Ein Steuerungsmodul mit einer System-CPU überwacht und steuert u.a. alle vorgenannten Baugruppen, die mit dem Steuerungsmodul und untereinander über einen internen Systembus z.B. nach dem CAN-Protokoll, vernetzt sind. Unterzentralen oder Koppler sind ähnlich aufgebaut.

Wegen der hohen Anforderungen an die Ausfallsicherheit ist das Steuerungsmodul redundant ausgeführt, das heißt zweifach vorhanden. Das im Normalbetrieb aktive Steuerungsmodul wird als Mastersteuerungsmodul und das redundante Steuerungsmodul als Slavesteuerungsmodul bezeichnet. Es übernimmt bei Ausfall des Mastersteuerungsmoduls dessen sämtliche Funktionen.

Weil grundsätzlich auch jedes der oben genannten "aktiven" Schnittstellenmodule ausfallen kann, wäre bei weiter erhöhten Anforderungen an die Ausfallsicherheit oder Betriebssicherheit auch jedes dieser Module zweifach nach dem gleichen Master/Slave-Prinzip vorzusehen. Bei einer großen Anzahl von Schnittstellenmodulen würden sich dadurch die Größe und vor allem die Kosten der Zentraleinheit sehr beträchtlich erhöhen.

Der Erfindung liegt die Aufgabe zugrunde, eine Gefahrenmeldeanlage der eingangs angegebenen Gattung und ein Verfahrenzu deren Betrieb zur Verfügung zu stellen, die eine verbesserte bzw. erhöhte Betriebssicherheit bieten.

Diese Aufgabe ist bei einer Gefahrenmeldeanlage der einleitend angegebenen Art gelöst durch ein an den internen Systembus angeschlossenes redundantes Schnittstellenmodul, auf welches das Steuerungsmodul bei Ausfall eines aktiven Schnittstellenmoduls dessen Feldbusleitung umschaltet und über den Systembus das Arbeitsprogramm des ausgefallenen Schnittstellenmoduls lädt.

Grundsätzlich kann daher das redundante Schnittstellenmodul jedes beliebige der aktiven Schnittstellenmodule ersetzen, das nicht mehr ordnungsgemäß arbeitet. Weil einerseits der Ausfall eines Schnittstellenmoduls eine Fehlermeldung z.B. auf einem Display der Zentraleinheit erzeugt und dadurch der umgehende Austausch des ausgefallenen Schnittstellenmoduls ausgelöst wird und andererseits der gleichzeitige Ausfall von mehr als einem aktiven Schnittstellenmodul ein extrem seltener Zustand ist, genügt es, für zahlreiche aktive Schnittstellenmodule ein einziges redundantes Schnittstellenmodul vorzusehen um ein unterbrechungsfreies oder nahezu unterbrechungsfreies Arbeiten der Gefahrenmeldeanlage auch bei einem Fehler in einem aktiven Schnittstellenmodul zu gewährleisten. Das schließt selbstverständlich nicht aus, bei Anlagen mit einer sehr großen Anzahl aktiver Schnittstellenmodule diese in Gruppen zu gliedern und für jede Gruppe von aktiven Schnittstellenmodulen jeweils ein redundantes Schnittstellenmodul vorzusehen. Andererseits muss nicht für jede Feldbusleitung ein (nahezu) unterbrechungsfreier Betrieb gewährleistet sein. Die Anlage kann also z.B. eine erste Gruppe aktiver Schnittstellenmodule umfassen, von denen jedes durch das redundante Schnittstellenmodul ersetzt werden kann und eine zweite Gruppe von aktiven Schnittstellenmodulen, bei denen diese Umschaltmöglichkeit auf ein redundantes Schnittstellenmodul nicht besteht.

Die elektrischen Verbindungen eines Schnittstellenmoduls mit seiner Feldbusleitung können über Umschalter geführt sein, die im normalen Betrieb die Feldbusleitung mit ihrem Schnittstellenmodul und bei dessen Ausfall mit dem redundanten Schnittstellenmodul verbinden. Diese Umschalter können grundsätzlich als geschaltete Halbleiter, z.B. MOSFETs, ausgeführt sein.

Weil über zumindest einige der Feldbusleitungen auch eine erhebliche Speiseleistung für die Teilnehmer und dementsprechend hohe Ströme übertragen werden, kann es zweckmäßiger sein, wenn jeder der Umschalter aus einem von dem Steuerungsmodul steuerbaren Relais mit mindestens einem Umschaltkontakt für jede der Adern der jeweiligen Feldbusleitung besteht und die Adern des Feldbusses in der einen, dem normalen Betrieb entsprechenden Schaltstellung mit den Anschlüssen seines Schnittstellenmoduls, in der anderen Schaltstellung mit den Anschlüssen des redundanten Schnittstellenmoduls verbunden sind. Jede der Adern der Feldbusleitung ist in diesem Fall mit einem beweglichen Umschaltkontakt verbunden, der in seiner einen Stellung diese Ader zu dem entsprechenden Anschluss des aktiven Schnittstellenmoduls durchschaltet, in seiner anderen Stellung, z.B. der Arbeitsstellung, jedoch zu dem korrespondierenden Anschluss des redundanten Schnittstellenmoduls durchschaltet. Zur Erhöhung der Ausfallsicherheit kann die Zuordnung auch so sein, so dass in der Arbeitsstellung des Umschaltkontaktes die Verbindung zu dem aktiven Schnittstellenmodul und in der Ruhestellung, d.h. wenn das Relais stromlos ist, die Verbindung zu dem redundanten Schnittstellenmodul besteht.

Alle Relais können zu einer Relaismatrix zusammengefasst und über einen gemeinsamen Mikrocontroller einzeln steuerbar sein. Die im normalen Betrieb offenen Kontakte aller Relais können elektrisch parallel mit den zugehörigen Anschlüssen des redundanten Schnittstellenmoduls verbunden sein. Die Relaismatrix kann als steckbare PCB-Karte ausgeführt sein. Dadurch wird erheblich Platz und Verdrahtungsaufwand eingespart. Über die Kontakte der PCB-Steckkarte kann gleichzeitig die Verbindung zwischen dem internen Systembus und dem Mikrocontroller der Relaismatrix hergestellt werden.

Zweckmäßig fragt das Steuerungsmodul periodisch den Betriebszustand der Schnittstellenmodule ab und sendet bei Ausfall eines aktiven Schnittstellenmoduls einen dieses Schnittstellenmodul charakterisierenden Befehl über den internen Systembus an den Mikrocontroller der Relaismatrix, der daraufhin das diesem Schnittstellenmodul zugeordnete Relais zur Umschaltung seiner Feldbusleitung auf das redundante Schnittstellenmodul ansteuert.

Wie eingangs bereits erwähnt, sind in der Regel die Feldbusleitungen mit ihrem Ende ringförmig zu ihrem Schnittstellenmodul zurückgeführt, das ebenso wie das redundante Schnittstellenmodul zur Speisung und Kommunikation der jeweiligen Feldbusleitung auch über deren Ende ausgebildet ist. Wie an sich bekannt, wird dadurch die Ausfallsicherheit der Feldbusleitungen erhöht, weil das jeweilige Schnittstellenmodul (oder die Teilnehmer) einen Kurzschluss oder eine Unterbrechung der Feldbusleitung erkennt, den Fehlerort isoliert und die dadurch entstandenen beiden Stichleitungen weiter betreibt. In diesem Fall sind je Feldbusleitung vier Umschalter bzw. ein Relais mit vier Umschaltkontakten erforderlich.

Das Verfahren zum Betreiben einer derartigen Gefahrenmeldeanlage mit einer verbesserten Betriebs- bzw. Ausfallsicherheit zeichnet sich dementsprechend dadurch aus, dass an den internen Systembus der Zentraleinheit mindestens ein weiteres, redundantes Schnittstellenmodul angeschlossen wird, das die Funktion eines ausgefallenen Schnittstellenmoduls übernehmen kann.

Hierzu lädt das Steuerungsmodul bei Ausfall eines Schnittstellenmoduls dessen Steuerungs- und Betriebsprogramm aus einem Speicher in das redundante Schnittstellenmodul und schaltet die Feldbusleitung des ausgefallenen Schnittstellenmoduls auf das redundante Schnittstellenmodul um.

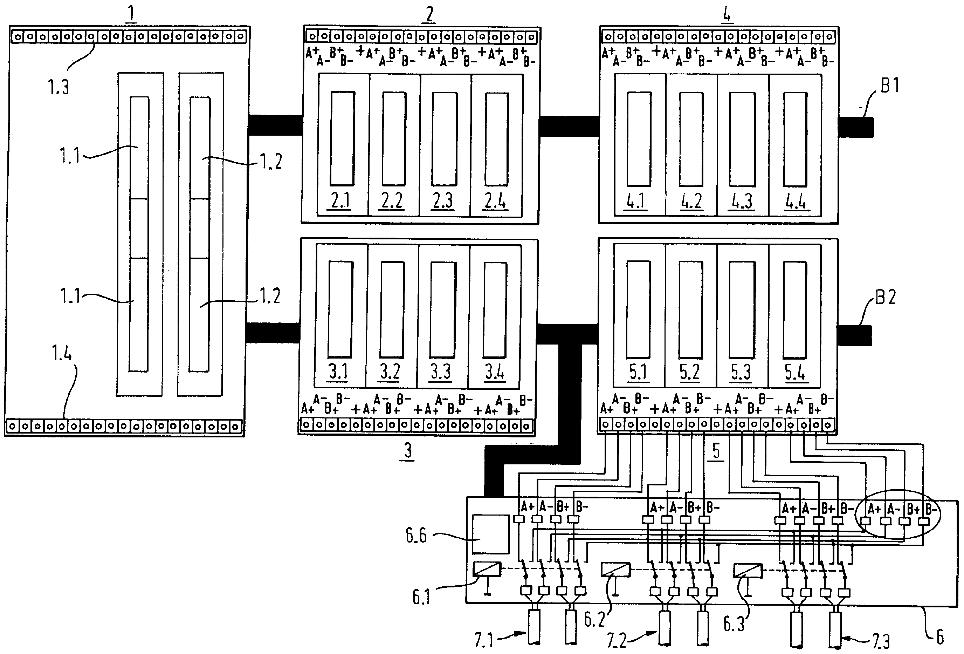

Die Erfindung wird nachfolgend anhand der Zeichnung erläutert, der ein vereinfachtes Ausführungsbeispiel zugrunde liegt.

Die Zeichnung zeigt lediglich die für das Verständnis der Erfindung wesentlichen Baugruppen einer sehr kleinen Zentraleinheit. Sie umfasst eine Hauptbaugruppe 1 mit einem Doppelsteckplatz für ein Mastersteuerungsmodul 1.1 in Form einer PCB-Steckkarte und einem weiteren Doppelsteckplatz für ein redundantes Slavesteuerungsmodul 1.2 in Form einer weiteren PCB-Steckkarte. Am oberen und unteren Rand der Hauptbaugruppe 1 sind Anschlussleisten 1.3 und 1.4 für externe Komponenten, z.B. die Speisespannungs- oder Stromversorgung, ein Display usw. angedeutet. Über einen internen Systembus, z.B. einem CAN-Bus B1, B2 sind die Hauptbaugruppe 1 bzw. das Mastersteuerungsmodul 1.1 und das Slavesteuerungsmodul 1.2 mit weiteren Baugruppen 2 bis 5 verbunden, genauer gesagt mit Steckplätzen für (nur beispielhaft) jeweils vier Schnittstellenmodule 2.1 bis 2.4, 3.1 bis 3.4, 4.1 bis 4.4 und 5.1 bis 5.4. Jedes Schnittstellenmodul in Form einer PCB-Steckkarte hat eine Anschlussleiste mit den Klemmen A+, A- für den Anfang sowie B+, B- für das Ende einer zweiadrigen Feldbusleitung und wird daher als Ring- oder Loopmodul bezeichnet. Die an die Baugruppen 2 bis 4 bzw. deren Ringmodule angeschlossenen 12 Feldbusleitungen sind nicht dargestellt.

Nur die Baugruppe 5 ist entsprechend der Erfindung ausgestattet. Sie umfasst drei aktive Ringmodule 5.1 bis 5.3 und ein redundantes Ringmodul 5.4. An die Anschlüsse A+, A- sowie B+, B- sind zweiadrige Feldbusleitungen 7.1, 7.2, 7.3 mit ihrem Anfang und ihrem Ende nicht direkt sondern über eine Relaismatrix 6 angeschlossen, die vorzugsweise in Form einer weiteren PCB-Steckkarte in einem weiteren Steckplatz der Zentraleinheit sitzt, jedoch zum besseren Verständnis schaltbildartig herausgezeichnet ist.

Die Relaismatrix 6 hat drei Relais 6.1 bis 6.3, die einzeln über einen Mikrocontroller 6.6 ansteuerbar bzw. schaltbar sind. Der Mikrocontroller 6.6 ist an den internen Systembus B1, B2 angeschlossen. Jedes Relais 6.1 bis 6.3 hat vier Umschaltkontakte. In dem dargestellten, normalen Betrieb sind die beiden Adern am Anfang und am Ende der jeweiligen Feldbusleitung 7.1, 7.2 und 7.3 über den jeweiligen beweglichen Relaiskontakt mit den Anschlüssen A+, A- sowie B+ und B-der Relaismatrix 6 verbunden. Diese Anschlüsse sind ihrerseits mit den Anschlüssen gleicher Bezeichnung des zugeordneten Ringmoduls 5.1 bis 5.3 verbunden.

Die in diesem normalen Betriebszustand offenen (feststehenden) Kontakte der Relais 6.1 bis 6.3 sind parallel verbunden und auf weitere Anschlüsse A+, A- sowie B+, B- auf der Relaismatrix 6 herausgeführt. Diese weiteren Anschlüsse, die durch die Ovalumrundung kenntlich gemacht sind, sind mit den entsprechenden Anschlüssen A+, A- sowie B+, B- des redundanten Ringmoduls 5.4 verbunden.

Das Mastersteuerungsmodul 1.1 (und ebenso das Slavesteurungsmodul 1.2) umfasst unter anderem eine System-CPU, die periodisch, z.B. alle 20 Sekunden, den Betriebszustand aller Ringmodule abfragt. Wenn die System-CPU feststellt, dass eines der Ringmodule 2.1 bis 4.4 fehlerhaft arbeitet oder sogar ausgefallen ist, sendet das Mastersteuerungsmodul 1.1 eine entsprechende Fehlermeldung z.B. an ein nicht dargestelltes Display oder eine andere externe Schnittstelle. Wenn die System-CPU hingegen ein fehlerhaftes Arbeiten eines der Ringmodule 5.1 bis 5.3 feststellt, generiert das Mastersteuerungsmodul zusätzlich einen mit der Adresse des fehlerhaften Ringmoduls verknüpften Befehl, den der Mikrocontroller 6.6 der Relaismatrix 6 aus dem internen Systembus B1, B2 ausliest und daraufhin das Umschalten des korrespondierenden Relais 6.1 oder 6.2 oder 6.3 auslöst. Gleichzeitig aktiviert die System-CPU über den internen Systembus B1, B2 das redundante Ringmodul 5.4. Dazu lädt das Mastersteuerungsmodul aus einem Speicher, in dem die individuellen Steuerungs- und Betriebsparameter bzw. -programme sämtlicher Ringmodule gespeichert sind, die Daten des ausgefallenen Ringmoduls 5.1 oder 5.2 oder 5.3 in den Speicher und/oder den Mikrocontroller des redundanten Ringmoduls 5.4. Folglich wird der Betrieb der zu dem ausgefallenen Ringmodul gehörenden Feldbusleitung und aller daran angeschlossenen Teilnehmer nun über das redundante Ringmodul 5.4 nach einer kurzen zum Umschalten der Feldbusleitung und zum Laden des Programms in das redundante Ringmodul 5.4 erforderlichen Wartezeit unverändert aufrecht erhalten.

## Patentansprüche

1. Gefahrenmeldeanlage mit einer Zentraleinheit, die mindestens ein Steuerungsmodul (1.1) und n Schnittstellenmodule (5.1 bis 5.3), wobei n gleich oder größer als 2 ist, umfasst, wobei jedes Schnittstellenmodul über eine zweiadrige Feldbusleitung (7.1 bis 7.3) Teilnehmer in Form von Sensoren und/oder Aktoren mit einer Betriebsspannung versorgt und zur digitalen Kommunikation zwischen dem Steuerungsmodul (1.1) und den Teilnehmern dient und wobei das Steuerungsmodul (1.1) und die Schnittstellenmodule (5.1 bis 5.3) an einen gemeinsamen internen Systembus (B1, B2) angeschlossen sind, **gekennzeichnet durch** ein an den internen Systembus (B1, B2) angeschlossenes, redundantes Schnittstellenmodul (5.4), auf das das Steuerungsmodul (1.1) bei Ausfall eines Schnittstellenmoduls (5.1 bis 5.3) dessen Feldbusleitung (7.1 bis 7.3) umschaltet und über den Systembus (B1, B2) das Arbeitsprogramm des ausgefallenen Schnittstellenmoduls lädt.

2. Gefahrenmeldeanlage nach Anspruch 1, **dadurch gekennzeichnet, dass** die elektrischen Verbindungen jedes Schnittstellenmoduls (5.1 bis 5.3) mit seiner Feldbusleitung (7.1 bis 7.3) über Umschalter (6.1 bis 6.3) geführt sind, die im normalen Betrieb die Feldbusleitung mit ihrem Schnittstellenmodul und bei dessen Ausfall mit dem redundanten Schnittstellenmodul (5.4) verbinden.

3. Gefahrenmeldeanlage nach Anspruch 2, **dadurch gekennzeichnet, dass** jeder der Umschalter aus einem von dem Steuerungsmodul (1.1) steuerbaren Relais (6.1 bis 6.3) mit mindestens einem Umschaltkontakt für jede der Adern der jeweiligen Feldbusleitung (7.1 bis 7.3) besteht und in der einen, dem normalen Betrieb entsprechenden Schaltstellung die Adern des Feldbusses mit den Anschlüssen seines Schnittstellenmoduls und in der anderen Schaltstellung mit den Anschlüssen des redundanten Schnittstellenmoduls (5.4) verbunden sind.

4. Gefahrenmeldeanlage nach Anspruch 3, **dadurch gekennzeichnet, dass** alle Relais (6.1 bis 6.3) zu einer Relaismatrix (6) zusammengefasst und über einen gemeinsamen Mikrocontroller (6.6) einzeln steuerbar sind und dass alle im normalen Betrieb offenen Kontakte der Umschaltkontakte mit den korrespondierenden Anschlüssen des redundanten Schnittstellenmoduls (5.4) parallel verbunden sind.

5. Gefahrenmeldeanlage nach Anspruch 4, **dadurch gekennzeichnet, dass** das Steuerungsmodul (1.1) den Betriebszustand der Schnittstellenmodule (5.1 bis 5.3) abfragt und bei Ausfall eines Schnittstellenmoduls einen dieses Schnittstellenmodul charakterisierenden Befehl über den internen Systembus (B1, B2) an den Mikrocontroller (6.6) der Relaismatrix (6) sendet und der Mikrocontroller (6) das diesem ausgefallenen Schnittstellenmodul zugeordnete Relais zur Umschaltung seiner Feldbusleitung auf das redundante Schnittstellenmodul (5.4) ansteuert.

6. Gefahrenmeldeanlage nach einem der Ansprüche 1 bis 5, **dadurch gekennzeichnet, dass** zumindest einige der Feldbusleitungen (7.1 bis 7.3) mit ihrem Ende ringförmig zu ihrem Schnittstellenmodul (5.1 bis 5.3) zurückgeführt sind und dass diese Schnittstellenmodule sowie das redundante Schnittstellenmodul (5.4) zur Speisung und Kommunikation der jeweiligen Feldbusleitung (7.1 bis 7.3) auch über deren Ende ausgebildet sind.

7. Verfahren zum Betreiben einer Gefahrenmeldeanlage mit einer Zentraleinheit, die mindestens ein Steuerungsmodul und n Schnittstellenmodule, wobei n gleich oder größer als 2 ist, umfasst, wobei jedes Schnittstellenmodul über eine zweiadrige Feldbusleitung Teilnehmer in Form von Sensoren und/oder Aktoren mit einer Betriebsspannung versorgt und zur digitalen Kommunikation zwischen dem Steuerungsmodul und den Teilnehmern dient und wobei das Steuerungsmodul und die Schnittstellenmodule an einen gemeinsamen internen Systembus angeschlossen sind, **dadurch gekennzeichnet, dass** an den internen Systembus mindestens ein weiteres, redundantes Schnittstellenmodul angeschlossen wird, das die Funktion eines ausgefallenen Schnittstellenmoduls übernehmen kann,
wobei das Steuerungsmodul bei Ausfall eines Schnittstellenmoduls dessen Arbeitsprogramm in das redundante Schnittstellenmodul lädt und die Feldbusleitung des ausgefallenen Schnittstellenmoduls auf das redundante Schnittstellenmodul umschaltet.

## Claims

1. Alarm system comprising a central processing unit which comprises at least one control module (1.1) and n interface modules (5.1 to 5.3), n being greater than or equal to 2, each interface module supplying nodes, in the form of sensors and/or actuators, with an operating voltage via a two-wire field bus line (7.1 to 7.3) and being used for digital communication between the control module (1.1) and the nodes, and the control module (1.1) and the interface modules (5.1 to 5.3) being connected to a common internal system bus (B1, B2), **characterised by** a redundant interface module (5.4) which is connected to the internal system bus (B1, B2) and to which, in the event of a failure of an interface module (5.1 to 5.3), the control module (1.1) switches the field bus line (7.1 to 7.3) thereof and loads the work program of the failed interface module onto said redundant interface module via the system bus (B1, B2).

2. Alarm system according to claim 1, **characterised in that** the electrical connections of each interface module (5.1 to 5.3) to the field bus line (7.1 to 7.3) thereof are routed via change-over switches (6.1 to 6.3) which connect the field bus line to the interface module thereof in normal operation and to the redundant interface module (5.4) in the event of a failure of said interface module.

3. Alarm system according to claim 2, **characterised in that** each of the change-over switches consists of a relay (6.1 to 6.3) which can be controlled by the control module (1.1) and comprises at least one change-over contact for each of the wires of the relevant field bus line (7.1 to 7.3) and, in one switching position corresponding to normal operation, the wires of the field bus are connected to the terminals of the interface module thereof and, in the other switching position, said wires are connected to the terminals of the redundant interface module (5.4).

4. Alarm system according to claim 3, **characterised in that** all relays (6.1 to 6.3) are combined in one relay matrix (6) and can be controlled individually via a common microcontroller (6.6) and **in that** all contacts of the change-over contacts that are open in normal operation are connected in parallel to the corresponding terminals of the redundant interface module (5.4).

5. Alarm system according to claim 4, **characterised in that** the control module (1.1) queries the operating state of the interface modules (5.1 to 5.3) and, in the event of a failure of an interface module, sends a command characterising said interface module via the internal system bus (B1, B2) to the microcontroller (6.6) of the relay matrix (6) and the microcontroller (6) activates the relay associated with said failed interface module in order to switch the field bus line thereof to the redundant interface module (5.4).

6. Alarm system according to any of claims 1 to 5, **characterised in that** the ends of at least some of the field bus lines (7.1 to 7.3) are returned in a circular manner to the interface module (5.1 to 5.3) thereof and **in that** said interface modules and the redundant interface module (5.4) are designed to supply power to and communicate with the relevant field bus line (7.1 to 7.3) also via the ends thereof.

7. Method for operating an alarm system comprising a central processing unit which comprises at least one control module and n interface modules, n being greater than or equal to 2, each interface module supplying nodes, in the form of sensors and/or actuators, with an operating voltage via a two-wire field bus line and being used for digital communication between the control module and the nodes, and the control module and the interface modules being connected to a common internal system bus, **characterised in that** at least one additional redundant interface module is connected to the internal system bus, which module can assume the function of a failed interface module, the control module, in the event of a failure of an interface module, loading the work program thereof into the redundant interface module and switching the field bus line of the failed interface module to the redundant interface module.

## Revendications

1. Système de signalisation de danger avec une unité centrale qui comprend au moins un module de commande (1.1) et n modules d'interface (5.1 à 5.3), dans lequel n est égal ou supérieur à 2, dans lequel chaque module d'interface alimente avec une tension de service, par le biais d'un câble bus de terrain bifilaire (7.1 à 7.3), des abonnés en forme de capteurs et / ou d'actionneurs et sert à la communication numérique entre le module de commande (1.1) et les abonnés et dans lequel le module de commande (1.1) et les modules d'interface (5.1 à 5.3) sont raccordés à un bus de système interne commun (B1, B2), **caractérisé par** un module d'interface (5.4) redondant, raccordé au bus de système interne (B1, B2), sur lequel le module de commande (1.1) lors d'une défaillance d'un module d'interface (5.1 à 5.3) commute son câble bus de terrain (7.1 à 7.3) et charge le programme de travail du module d'interface défaillant par le bus de système (B1, B2).

2. Système de signalisation de danger selon la revendication 1, **caractérisé en ce que** les liaisons électriques de chaque module d'interface (5.1 à 5.3) sont guidées avec son câble bus de terrain (7.1 à 7.3) par des commutateurs (6.1 à 6.3) qui relient, en fonctionnement normal, le câble bus de terrain avec son module d'interface et, en cas de défaillance de celui-ci, avec le module d'interface redondant (5. 4).

3. Système de signalisation de danger selon la revendication 2, **caractérisé en ce que** chacun des commutateurs est composé d'un relais (6.1 à 6.3) pouvant être commandé par le module de commande (1.1) avec au moins un contact à permutation pour chacun des fils du câble bus de terrain respectif (7.1 à 7.3) et dans la position de commutation correspondant au fonctionnement normal, les fils du bus de terrain sont reliés aux pôles de son module d'interface et, dans l'autre position de commutation, aux pôles du module d'interface redondant (5.4).

4. Système de signalisation de danger selon la revendication 3, **caractérisé en ce que** tous les relais (6.1 à 6.3) sont réunis en une matrice de relais (6) et peuvent être commandés individuellement par un microcontrôleur commun (6.6) et **en ce que** tous les contacts, ouverts en fonctionnement normal, des contacts à permutation sont reliés parallèlement aux pôles correspondants du module d'interface redondant (5.4) .

5. Système de signalisation de danger selon la revendication 4, **caractérisé en ce que** le module de commande (1.1) interroge l'état de fonctionnement des modules d'interface (5.1 à 5.3) et, en cas de défaillance d'un module d'interface, envoie un ordre caractérisant ce module d'interface au microcontrôleur (6.6) de la matrice de relais (6) par le biais du bus de système interne (B1, B2) et le microcontrôleur (6) dirige le relais affecté à ce module d'interface défaillant pour commuter son câble bus de terrain sur le module d'interface redondant (5.4) .

6. Système de signalisation de danger selon l'une des revendications 1 à 5, **caractérisé en ce qu'**au moins quelques-uns des câbles bus de terrain (7.1 à 7.3) avec leur extrémité sont ramenés en forme d'anneau à leur module d'interface (5.1 à 5.3), et **en ce que** ces modules d'interface ainsi que le module d'interface redondant (5.4) sont conçus pour l'alimentation et la communication du câble bus de terrain respectif (7.1 à 7.3) également par son extrémité.

7. Procédé pour le fonctionnement d'un système de signalisation de danger avec une unité centrale qui comprend au moins un module de commande et n modules d'interface, dans lequel n est égal ou supérieur à 2, dans lequel chaque module d'interface alimente avec une tension de service, par le biais d'un câble bus de terrain bifilaire, des abonnés en forme de capteurs et / ou d'actionneurs et sert à la communication numérique entre le module de commande et les abonnés et dans lequel le module de commande et les modules d'interface sont raccordés à un bus de système interne commun, **caractérisé en ce qu'**au bus de système interne est raccordé au moins un autre module d'interface redondant, qui peut assumer la fonction d'un module d'interface défaillant, dans lequel le module de commande, en cas de défaillance d'un module d'interface, charge son programme de travail dans le module d'interface redondant et commute le câble bus de terrain du module d'interface défaillant sur le module d'interface redondant.
